# EUROPEAN PATENT SPECIFICATION

(11) **EP 2 808 365 B1**
(45) Date of publication and mention of the grant of the patent: **13.07.2016**
(21) Application number: 14169767.2
(22) Date of filing: 26.05.2014
(51) Int. Cl.: C09D 5/00

(54) **Layer structure and mixture for use in a method for producing the layer structure**
Schichtstruktur und Mischung zur Verwendung in einem Verfahren für Schichtstrukturherstellung
Structure stratifiée et mélange destiné à être utilisé dans un procédé de production de cette structure de couche

(30) Priority: 31.05.2013 DE 102013009148
(43) Date of publication of application: 03.12.2014
(73) Proprietor: FL-Services GmbH, 56288 Korweiler (DE)
(72) Inventor: Welk, Joachim, 27612 Nesse (DE)
(74) Representative: Scholz, Volker

(56) References cited:
- EP-A1- 1 443 031
- WO-A1-01/85854
- WO-A1-2004/031304
- WO-A1-2008/113075
- FR-A1- 2 860 798
- US-A1- 2004 018 109
- US-A1- 2007 249 736

## Description

The present invention relates to a layer structure and a mixture for use in a method for producing the layer structure.

By coating motor vehicle parts or marine hulls with chromium, very shiny motor vehicle or marine hull surfaces can be obtained. Owing to the optical impression thus formed, an exclusive effect is achieved and a refined appearance is obtained. One possibility of obtaining such chromium coatings is electroplating chromium onto motor vehicles or parts thereof. Such a coating method, however, is accompanied with high energy and material costs.

As alternative to such electroplating methods, therefore, in the past various paints have been developed which can be applied to surfaces, in particular of motor vehicles, motor vehicle parts or boats. The paints known from the prior art, however, have numerous disadvantages which restrict use in practice.

For instance, conventional paints usually exhibit poor adhesion to the undersurface. Also, conventional paints appear to be not very UV-resistant and are not storage-stable. Furthermore, from the prior art, only those paints are known which contain one or more binders.

WO 2008/113075 A1 relates to a surface protective dendritic polymer composition and to the cross-linked surface protective coating formed therefrom.

US 2004/0018109 A1 discloses processes for preparing and using novel composite particles in powder coating compositions.

US 2007/0249736 A1 discloses a titanium-containing silica sol and process for producing anti-fouling films prepared therefrom.

FR 2 860 798 relates to a coating composition for making coatings on non-metallic surfaces.

WO 2009/031309 A1 discloses pigment compositions containing aluminium metal-based particles said particles comprising a surface oxidation layer having an average thickness of at least 5nm and hydrocarbon chains which are linked to the surface of the particles. Further, this prior art document discloses the use of the particles in water-based metallic paints.

EP 1 443 031 A1 discloses thermally insulating coating materials for refractory containing carbon.

WO 01/85854 A1 relates to a chromium VI-free coating composition, comprising a binder and a corrosion inhibitor in a solvent, wherein the binder comprises a silicate and an organic titanate, and the corrosion inhibitor comprises aluminium particles and zinc particles.

It is therefore the object of the present invention, while overcoming disadvantages of the prior art, to provide the possibility of coating surfaces in such a manner that they exhibit a typical chrome look. In particular, a mixture shall be provided therefor, which can be used without binders and with the aid of which a UV-resistant, storage-stable, well-adhering paint can be provided.

This object is achieved by the invention as defined in the independent claims. Preferred embodiment results from the sub-claims.

This object is particularly achieved by a mixture for producing a layer in a layer structure, comprising: a) 0.1-10 parts by weight of metal particles of a median particle size D50 of 2-20 µm; b) 30-70 parts by weight of a first solvent having a boiling point of above 100°C and a vapour pressure of 1-15 hPa (20°C); and c) 30-70 parts by weight of a second solvent having a boiling point of below 100°C and a vapour pressure of 20-200 hPa (20°C).

According to the invention the metal particles are aluminium particles, iron particles, chromium particles or mixtures thereof. Iron particles in this case are also taken to mean steel particles, preferably stainless steel particles or stainless steel pigments.

The expression metal particles in the context of the present invention is equivalent to metal pigments.

Median particle size (D50) is taken to mean that particle size above which, and below which, half the amount of the particle size distribution is situated.

It can be preferred that the metal particles are spherical particles. However according to the invention, there are likewise provided, also, those particles which have a non-spherical shape. In this case, the expression the median particle size shall relate to the diameter of the particles in at least one spatial direction.

Numerous methods for determining the particle sizes are known to a person skilled in the art from the prior art, for example transmission electron microscopy (TEM), scanning electron microscopy (SEM), light scattering etc. Thus, it is known, for example, from the prior art, that particle sizes can easily be determined by light scattering experiments, for instance using a CILAS 1064 particle size analyser.

It can be preferred, in particular, that the metal particles have a median particle size D50 of 5-15 µm, still more preferably 8-12 µm, particularly preferably 9-11 µm.

Further important parameters for characterizing the particles with respect to their size are the parameters D10 and D90. By analogy with the median particle size D50, D10 is taken to mean that particle size below which 10% of the amount of the particle size distribution is situated. In the same manner, the numerical value D90 is taken to mean that particle size below which 90% of the amount of the particle size distribution is situated.

Preferably, a D10 value of the metal particles of 2-10 µm can be provided, particularly preferably 4-8 µm, and particularly preferably 5-7 µm.

Also, preferably a D90 value of the metal particles of 15-35 µm can be provided, in particular 20-30 µm.

Also, it can be preferred that the metal particles are present in the mixture in an amount of 0.5-5 parts by weight, still more preferably 1-3 parts by weight, particularly preferably 1-2 parts by weight.

According to the invention the first solvent is a carboxylic ester. In this case, preference is given to carboxylic esters of aliphatic carboxylic acids and aliphatic alcohols, in particular n-aliphatic carboxylic acids and alcohols. Particularly preferably, the first solvent is butyl acetate (acetic acid-n-butyl ester).

Also, it can be preferred that the first solvent has a poor solubility in water, which is taken to mean a solubility of less than 20 g/l, preferably 15 g/l, at 20°C.

Preferably, it can be.provided that the first solvent is present in an amount of 5-65 parts by weight, more preferably 10-60 parts by weight, still more preferably 10-50 parts by weight.

Also, it can preferably be provided that the first solvent has a boiling point of above 110°C, still more preferably 115°C, particularly preferably 120°C. Boiling point in this case, as also in the remaining text of the application and the claims, unless stated otherwise, shall be taken to mean the boiling point under standard conditions at room temperature (20°C) and standard atmospheric pressure.

According to the invention the second solvent is an alcohol. In particular, it can be provided, in this case, that the alcohol is a straight-chain or branched aliphatic alcohol, particularly preferably methanol, ethanol, 1-propanol, 2-propanol, or mixtures thereof. In particular, it can be provided according to the invention that the second solvent is 2-propanol.

According to the invention, it can further preferably be provided that the second solvent is completely water-soluble at 20°C.

Preferably, the second solvent is present in the mixture according to the invention in an amount of 35-65 parts by weight, still more preferably 40-60 parts by weight, additionally preferably 45-55 parts by weight, particularly preferably in an amount of 50 parts by weight.

In a particularly preferred embodiment, it is provided that the mixture according to the invention contains 50 parts by weight of the first solvent and 50 parts by weight of the second solvent.

Also, it can preferably be provided that the second solvent has a boiling point of below 95°C, still more preferably below 90°C, particularly preferably below 85°C.

Also preferably provided is a vapour pressure of the second solvent of 30-150 hPa (20°C), particularly preferably 35-100 hPa (20°C).

In addition, in a preferred embodiment, it can be provided that the mixture further comprises d) 1-50 parts by weight of a third solvent having a boiling point of 100-200°C and a vapour pressure of 1-40 hPa (20°C), preferably selected from the group of α,ω-diol monoalkyl ethers; and/or e) 10-70 parts by weight of water.

Preferably, alkyl in this case is selected from linear or branched alkyl having 1-6 carbon atoms. It is also preferred that the α,ω-diol is selected from the group of α,ω-diols having 1 to 5 carbon atoms.

Particularly preferably, the third solvent has a boiling point in a range of 120-180°C, preferably 150-180°C, particularly preferably 170-175°C.

It is also preferred that the third solvent has a vapour pressure of 1-5 hPa, preferably 1-3 hPa.

Also, it can preferably be provided that the α,ω-diol monoalkyl ether is present in the mixture according to the invention in an amount of 1-20, preferably 5-15, particularly preferably 10 parts by weight.

Particularly preferably, the α,ω-diol monoalkyl ether is selected from the group of glycol ethers, particularly preferably ethyleneglycol monobutyl ether.

Also, it can particularly preferably be provided that water is present in a fraction of 10-50, preferably 20-40, particularly preferably 30 parts by weight in the mixture according to the invention.

Preferably, it can be provided in this case that the water is distilled water, deionized water etc. Nevertheless, untreated water, for instance tap water, can also be used in the mixture according to the invention, provided that substances present in the untreated water, for instance salts, are present at a concentration which does not adversely affect the remaining ingredients used in the mixture.

Without restricting the scope of protection of the application, it can be assumed that the use of the third solvent leads to an improved binding of the pigments. Likewise, it can be assumed that the use of water in the mixture according to the invention can be suitable to decrease the overspray.

In a further particularly preferred embodiment, it can be provided that the mixture according to the invention contains 10 parts by weight of the first solvent, 50 parts by weight of the second solvent, 10 parts by weight of the third solvent and 30 parts by weight of water.

In a further preferred embodiment, it is provided that the mixture does not contain binders.

Binders are taken to mean those substances via which powders, for instance metal pigments, are stuck to one another or to a support. In particular, this is taken to mean polymers, synthetic resins, curing agents, etc., not only in a one-component form, but also in a two-component form. By way of example, but without any limiting claim to completeness, binders in this context are: nitrocellulose, vinyl chloride-vinyl acetate copolymer, high-molecular-weight film-forming agent such as, for example, unsaturated polyester resins, epoxy resins, chlorinated rubber, vinyl polymer, styrene-butadiene copolymers, silicones, polyester resins, acrylic esters, epoxy resins, alkidyl resins, polyester resins, rosin, dammar gum etc.

Furthermore, the object is achieved by a method for producing a layer structure, comprising: a) providing a support; b) applying a plastic and/or synthetic resin layer to the support; c) applying a mixture according to the invention to the plastic and/or synthetic resin layer, in order to obtain a layer; and d) applying a clear lacquer to the layer obtained in step c).

In a particularly preferred embodiment, it can be provided according to the invention that, for protection of the chrome paint, before application of a clear lacquer in step d) of the method according to the invention, a solution of the third solvent in water, preferably containing 1-50% of the third solvent, is applied.

In principle, the specific nature of the support in the method according to the invention is not restricted, provided that a sufficient adhesion of the plastic and/or synthetic resin in step a) is ensured. Suitable support/plastic/synthetic resin combinations will be found by a person skilled in the art without effort from the prior art on the basis of his general specialist knowledge. In particular, it is preferably provided according to the invention that the support is a motor vehicle body, motor vehicle parts, ship hull, in particular a yacht hull.

Generally, for application of the various layers in steps b)-d), any method known from the prior art can be used. Those that are particularly preferably provided here are liquid coating methods, such as decorating, dying, painting, rotary spraying, spray painting, hand painting, slot-nozzle coating, dip coating, spray coating, etc., preferably spray painting or hand painting.

The chrome paint is particularly preferably applied using a flow cup spray gun having a preferred nozzle size of 1.0 mm, or under computer control with a spray system, wherein, in the latter case, the nozzle size must be adapted.

In one embodiment of the method according to the invention, it can preferably be provided that the plastic and/or the synthetic resin is polyurethane, epoxy resin, polyacrylate or mixtures of the same.

Likewise, it can preferably be provided that the plastic and/or the synthetic resin additionally has a black tone, for example by adding carbon black, graphite etc.

According to the invention it can be particularly preferred that the plastic and/or the synthetic resin, after the application in step b), is allowed to stand for a relatively long time, preferably about one week, in air at room temperature under standard pressure, in order to ensure outgassing. If necessary, it can preferably be provided that the layer surface thus obtained is polished.

In a further preferred embodiment of the method according to the invention, it is provided that in step c) of the method according to the invention the mixture according to the invention is applied repeatedly, preferably 3-5 times, or, depending on the application sector, even more frequently. In particular, it is preferably provided in this case that different mixtures are successively applied, in particular mixtures which contain different metal particles. The layer obtained by step c) of the method according to the invention can accordingly itself have a layer structure.

After the application of the mixture according to the invention in step c) of the method according to the invention, it can preferably be provided that the resultant layer (paint) is allowed to stand for one day at room temperature under standard pressure under air atmosphere. As also in conclusion to the application in step b) or d), this time can be shortened, for example by using elevated temperatures, for example in a furnace, by using a hairdryer, etc., or by application of a reduced pressure.

Preferably, it can likewise be provided that, subsequently to the standing according to step c), a cleaning step follows, for instance by removing the "overspray" with a microfibre cloth with a slight pressure.

In a preferred embodiment of the method according to the invention, it can be provided that the clear lacquer is polyurethane clear lacquer, acrylic clear lacquer, nano clear lacquer or mixtures of the same.

Nano clear lacquer here is taken to mean a (clear) lacquer which is admixed with ceramic particles of a size from 1 to 500 nm. For production, the nano ceramic particles are mixed with the standard clear lacquer. It is known from the prior art that nano clear lacquers are markedly more resistant to external mechanical actions, acids and dirt. In addition, such a surface structure allows dirt to run off in droplets more readily.

Particularly preferably, in this case, the nano clear lacquer is a two-component polyether siloxane resin, wherein the lacquer is an unpigmented clear lacquer. This preferred nano clear lacquer has advantageous properties, in particular in the corrosion protection of stainless steel, untreated aluminium, and all anodized and chromated surfaces. Extremely abrasion-, impact- and scratch-resistant soilings can be removed by means of such a preferred nano clear lacquer without special expenditure. The nano clear lacquer thus preferred is sea water- and salty air-resistant, protects against acid rain, reduces fading of aluminium, stainless steel and hard wood, is resistant to many chemicals and is free from organic solvents, chromate and lead within the meaning of the hazardous substances regulation. Painted surfaces treated with the preferred nano clear lacquer can be cleaned with any commercially available cleaner.

Owing to the properties described herein before, the preferred nano clear lacquer is suitable in particular for the use according to the invention on ship components above and below the water line, in particular deck, structures and masts.

Furthermore, the object is achieved by a layer structure obtainable by the method according to the invention.

Likewise, layer structures according to the invention are taken to mean those layer structures which, in addition to the layers obtained in steps b) and d), comprise further, preferably transparent, layers, which, according to the invention, can be obtained by additional coating steps between steps a) and b), b) and c), or c) and d), and also after step d).

The layer obtained in step c) of the method according to the invention shall, in the context of the present application, be taken to mean a paint, for example owing to its chrome-like appearance as chrome paint. In particular, it can be provided according to the invention that this (chrome) paint layer obtained in step c) has a thickness of 1-10 µm, preferably 2-5 µm.

Finally, the object is achieved by the use of the layer structure according to the invention as coating of motor vehicle bodies or boat or ship hulls, in particular yacht hulls. Likewise, in this case, use of the layer structure according to the invention as coating of motor vehicle components, boat components or ship components is also provided according to the invention. In this context, a use shall be taken to mean that the motor vehicle, boat, or ship surface, or the surface of components of the same, is considered as a support in the context of the method according to the invention.

Surprisingly, it has been established by the inventors that the mixture according to the invention, when used in the method according to the invention, makes possible the provision of paint layers, in particular on boat or yacht hulls, which overcome the disadvantages of the prior art, in particular have an increased adhesion, UV-resistance, storage stability, and which can be obtained without the aid of binders. In addition, in contrast to conventional chrome effect paints, a non-solvent-based solution was able to be found, and the necessity of an intermediate coat of water-based binders after application of the chrome paint was able to be avoided. Likewise, a VOC-compliant paint was able to be obtained.

Further advantages of the invention result, without restricting the scope of protection of the invention thereby, from the more detailed description of the invention with reference to the following examples.

### Example 1

A glass or stainless steel support was coated with polyacrylic polymer, epoxy resin or polyurethane. After the layer was cured, a mixture consisting of 50 ml of n-butyl acetate, 50 ml of 2-propanol and 1-1.5 g of aluminium pigments of a particle size D50 of 10 µm was applied. The resultant layer was allowed to stand in air for 24 hours at room temperature and then covered with a polyurethane or acrylic clear lacquer or a nano clear lacquer of the same materials.

### Example 2

A further coating was produced corresponding to the detailed description of Example 1. In a departure from Example 1, in this case, a mixture of 50 ml n-butyl ester, 50 ml of isopropanol and 2 g of stainless steel pigments of a particle size D50 of 10 µm was used.

### Example 3

A coating was produced corresponding to the detailed description of Example 1. In a departure from Example 1, onto the layer obtained by application of the mixture of butyl acetate, isopropanol and aluminium pigments, a further layer was applied by applying a mixture of n-butyl acetate, isopropanol and stainless steel pigments corresponding to Example 2. In this case, the use of nano clear lacquer in the final step was not possible.

In all examples, coatings were able to be obtained which have a superior appearance to those known from the prior art, exhibited a higher UV-resistance, and could be stored for a long time without loss of stability. In particular, as a result of the coating obtained according to Example 3, an optically novel, adequately described as "warm chrome effect", optical impression resulted.

The features of the invention disclosed in the above description, and also in the claims, can be important not only individually, but also in combination, for effecting the invention in the various embodiments thereof.

## Claims

1. Mixture for producing a layer in a layer structure, comprising:
a) 0.1-10 parts by weight of metal particles of a median particle size (D50) of 2-20 µm;
b) 1-70 parts by weight of a first solvent having a boiling point of above 100°C and a vapour pressure of 1-15 hPa (20°C); and
c) 30-70 parts by weight of a second solvent having a boiling point of below 100°C and a vapour pressure of 20-200 hPa (20°C),
wherein the metal particles are aluminium particles, iron particles, chromium particles or mixtures thereof,
wherein the first solvent is a carboxylic ester and
wherein the second solvent is an alcohol.

2. Mixture according to any one of the preceding claims, further comprising:
d) 1-50 parts by weight of a third solvent having a boiling point of 100-200°C and a vapour pressure of 1-40 hPa (20°C), preferably selected from the group of α-,ω-diol monoalkyl ethers; and/or
e) 10-70 parts by weight of water.

3. Method for producing a layer structure, comprising:
a) providing a support;
b) applying a plastic and/or synthetic resin layer to the support;
c) applying a mixture according to any one of the preceding claims to the plastic and/or synthetic resin layer, in order to obtain a layer; and
d) applying a clear lacquer to the layer obtained in step c).

4. Method according to Claim 3, wherein the plastic and/or the synthetic resin is polyurethane, epoxy resin, polyacrylate or mixtures thereof.

5. Method according to Claim 3 or 4, wherein the clear lacquer is polyurethane clear lacquer, acrylic clear lacquer, nano clear lacquer or mixtures thereof.

6. Layer structure obtainable by a method according to any one of Claims 3 to 5.

7. Use of the layer structure according to Claim 6 as coating of motor vehicle bodies or boat or ship hulls, in particular yacht hulls.

## Patentansprüche

1. Mischung zur Herstellung einer Schicht in einem Schichtaufbau, umfassend:
a) 0,1-10 Gewichtsteile Metallpartikel einer Halbwertskorngröße (D50) von 2-20 µm;
b) 1-70 Gewichtsteile eines ersten Lösungsmittels mit einem Siedepunkt von mehr als 100°C und einem Dampfdruck von 1-15 hPa (20°C); und
c) 30-70 Gewichtsteile eines zweiten Lösungsmittels mit einem Siedepunkt von weniger als 100°C und einem Dampfdruck von 20-200 hPa (20°C),
wobei die Metallpartikel Aluminiumpartikel, Eiserzpartikel, Chrompartikel oder Mischungen derselben sind,
wobei das erste Lösungsmittel ein Carbonsäureester ist, und
wobei das zweite Lösungsmittel ein Alkohol ist.

2. Mischung nach einem der vorangehenden Ansprüche, ferner umfassend:
d) 1-50 Gewichtsteile eines dritten Lösungsmittels mit einem Siedepunkt von 100-200°C und einem Dampfdruck von 1-40 hPa (20°C), vorzugsweise ausgewählt aus der Gruppe der α-, ω-Diolmonoalkylether; und/oder
e) 10-70 Gewichtsteile Wasser.

3. Verfahren zum Herstellen eines Schichtaufbaus, umfassend:
a) Bereitstellen eines Trägers;
b) Aufbringen einer Kunststoff- und/oder Kunstharzschicht auf dem Träger;
c) Aufbringen einer Mischung nach einem der vorangehenden Ansprüche auf die Kunststoff- und/oder Kunstharzschicht, um eine Schicht zu erhalten; und
d) Aufbringen eines Klarlacks auf die Schicht erhalten nach Schritt c).

4. Verfahren nach Anspruch 3, wobei der Kunststoff und/oder das Kunstharz Polyurethan, Epoxidharz, Polyacrylat oder Mischungen derselben ist.

5. Verfahren nach Anspruch 3 oder 4, wobei der Klarlack Polyurethanklarlack, Acrylklarlack, Nanoklarlack oder Mischungen derselben ist.

6. Schichtaufbau erhältlich durch ein Verfahren nach einem der Ansprüche 3 bis 5.

7. Verwendung des Schichtaufbaus nach Anspruch 6 als Beschichtung von Fahrzeugkarosserien oder Boots- bzw. Schiffsrümpfen, insbesondere Yachtrümpfen.

## Revendications

1. Mélange pour la production d'une couche dans une structure en couches, qui comprend :
a) 0,1-10 parties en poids de particules métalliques dont la granulométrie médiane (D50) est de 2-20 µm ;
b) 1-70 parties en poids d'un premier solvant ayant un point d'ébullition supérieur à 100 °C et une pression de vapeur de 1-15 hPa (20 °C) ; et
c) 30-70 parties en poids d'un deuxième solvant ayant un point d'ébullition inférieur à 100 °C et une pression de vapeur de 20-200 hPa (20 °C),
où les particules métalliques sont des particules d'aluminium, des particules de fer, des particules de chrome ou des mélanges de celles-ci,
où le premier solvant est un ester carboxylique et
où le deuxième solvant est un alcool.

2. Mélange selon l'une quelconque des revendications précédentes, qui comprend en outre :
d) 1-50 parties en poids d'un troisième dissolvant ayant un point d'ébullition de 100-200 °C et une pression de vapeur de 1-40 hPa (20 °G) préférablement sélectionné dans le groupe consistant en des éthers monoalkyliques de α-,ω-diol ; et/ou
e) 10-70 parties en poids d'eau.

3. Procédé de production d'une structure en couches, qui comprend les étapes consistant à :
a) se munir d'un support ;
b) appliquer une résine plastique et/ou synthétique sur le support ;
c) appliquer un mélange selon l'une quelconque des revendications précédentes sur la couche de résine plastique et/ou synthétique afin d'obtenir une couche ; et
d) appliquer un vernis transparent sur la couche obtenue à l'étape c).

4. Procédé selon la revendication 3, où la résine plastique et/ou synthétique est un polyuréthane, une résine époxy, un polyacrylate ou des mélanges de ceux-ci.

5. Procédé selon la revendication 3 ou 4, où le vernis transparent est un vernis polyuréthane transparent, un vernis acrylique transparent, un vernis nano transparent ou des mélanges de ceux-ci.

6. Structure en couches qui peut être obtenue par un procédé selon l'une quelconque des revendications 3 à 5.

7. Utilisation de la structure en couches selon la revendication 6 comme revêtement de carrosserie de véhicules automobiles ou de coques de bateaux ou de yachts, en particulier de coques de yachts.
